# EUROPEAN PATENT SPECIFICATION

(11) **EP 4 283 417 B1**
(45) Date of publication and mention of the grant of the patent: **26.08.2026**
(21) Application number: 21921096.0
(22) Date of filing: 02.03.2021
(51) Int. Cl.: G05B 19/05, G06Q 50/04, G06F 30/10

(54) **SYSTEM CONFIGURATION PROPOSAL DEVICE AND SYSTEM CONFIGURATION PROPOSAL METHOD**
SYSTEMKONFIGURATIONSVORSCHLAGSVORRICHTUNG UND SYSTEMKONFIGURATIONSVORSCHLAGSVERFAHREN
DISPOSITIF DE PROPOSITION DE CONFIGURATION DE SYSTÈME ET PROCÉDÉ DE PROPOSITION DE CONFIGURATION DE SYSTÈME

(30) Priority: 21.01.2021 JP 2021008292
(43) Date of publication of application: 29.11.2023
(73) Proprietor: OMRON Corporation, Kyoto 600-8530 (JP)
(72) Inventor: TESHIMA, Ryuichi, Kyoto-shi, Kyoto 600-8530 (JP)
(74) Representative: Becker, Eberhard
(86) International application number: PCT/JP2021/007925
(87) International publication number: WO 2022/157989

(56) References cited:
- JP-A- 2003 005 978
- JP-A- 2003 124 937
- JP-A- H11 231 927
- US-A1- 2014 082 116

## Description

### Technical Field

The present invention relates to a system configuration proposal device and a system configuration proposal method.

### Related Art

In the field of factory automation (FA), various types of devices are controlled to share work processes. In order to operate various controllers, remote I/O, and manufacturing devices used for work in certain areas such as factory facilities in cooperation, industrial network systems, also called field networks, have been constructed to connect these devices.

A general industrial network system uses a master-slave network composed of various slave devices and a master device. The slave device is a device that controls equipment installed in a factory or collects data. The master device is a device called (PLC: Programmable Logic Controller), for example, that centrally manages these slaves.

Conventionally, techniques have been proposed for supporting users of industrial network systems. For example, Patent Literature 1 discloses a design support device for a network system composed of a master device and a plurality of slave devices. The design support device is characterized in including a design information storage means for storing design information including at least slave device information and topology information in a designed network system created by a user; an actual configuration information generation means for generating actual configuration information including at least slave device information and topology information in an actual network system based on the information collected by the master device from each slave device in the actual network system; a comparison means for comparing the design information and the actual configuration information; and an output means for generating a comparison screen showing the configuration of the designed network system and the configuration of the actual network system together with their similarities and differences based on a comparison result of the comparison means, and outputting the comparison screen to a display device.

Furthermore, Patent Literature 2 discloses a control system including a PLC and an information processing device. The PLC includes an interface unit that functions as an interface with an external device, and a CPU unit that controls the interface unit. The interface unit includes a relay element having a contact point between an internal circuit and the external device, and a third storage part that stores unit identification information for identifying the interface unit. The CPU unit includes a first storage part; a processor that counts the number of times the contact point of the relay element is opened and closed, and stores opening/closing count information representing the number of times of opening and closing in the first storage part; and a transmission part that transmits the opening/closing count information stored in the first storage part to the information processing device, acquires the unit identification information from the interface unit, and transmits the unit identification information to the information processing device. The information processing device includes a second storage part that stores PLC identification information that identifies the PLC, a program to be executed by the PLC, and a generation rule of proposal information representing a proposal for arranging the interface unit; a receiving part that receives the opening/closing count information and the unit identification information; a display part; and a control part that stores the opening/closing count information and the unit identification information received by the receiving part in the second storage part in association with the PLC identification information, analyzes the program to calculate a predicted value of the number of times of opening and closing, generates the proposal information according to the generation rule based on the calculated predicted value, and causes the display part to display the generated proposal information.

### Citation List

### Patent Literatures

[Patent Literature 1] Japanese Patent Laid-Open No. 2012-194631
[Patent Literature 2] Japanese Patent No. 6732146
Patent Literature US 2014/082116 A1 relates to a design assistance device including: a design information storage section to store design information containing at least information of slave devices and information of a topology in a network system in accordance with a design created by a user; an actual configuration information generation section to generate actual configuration information containing at least the information of the slave devices and the information of the topology in the actual network system; a comparison section to compare the design information and the actual configuration information; and an output section to generate a comparison screen indicating the respective configurations of the designed network system and the actual network system along with their commonalities and differences and outputting the comparison screen to a display device.

### SUMMARY OF INVENTION

### Technical Problem

However, even if the user uses these conventional techniques, it is not possible to support the design of a new system configuration that is able to realize the desires of the user. Thus, it is not possible to reduce the burden on the user when constructing a new system configuration for realizing the desires of the user.

The present invention has been made in order to solve the above problem, and an object of the present invention is to reduce the burden on the user when constructing a new system configuration for realizing the desires of the user.

### Solution to Problem

The invention is set out in the appended set of claims. The following disclosure serves a better understanding of the present invention. In order to solve the above problem, a system configuration proposal device according to one aspect of the present invention comprises: an input part configured to receive, from a user, a selection of a case from a predetermined set of application cases of Programmable Logic Controller, PLC, system; a comparison part configured to compare an existing system configuration including a PLC with a system configuration corresponding to the case selected; and a proposal part configured to propose to the user a new system configuration including a device required for realizing the case based on a comparison result.

### Effects of Invention

One aspect of the present invention achieves an effect that it is possible to reduce the burden on the user when constructing a new system configuration for realizing the desires of the user.

### BRIEF DESCRIPTION OF DRAWINGS

FIG. 1 is a block diagram showing a configuration of the system configuration proposal device according to an embodiment of the present invention.
FIG. 2 is a diagram showing an example of the information stored in the case DB.
FIG. 3 is a flowchart showing the flow of a series of processes executed by the system configuration proposal device.
FIG. 4 is a diagram showing the display on which three cases are displayed.
FIG. 5 is a diagram showing the display on which the system configuration of the user defined by the project file is displayed.
FIG. 6 is a diagram showing the display on which the devices required for realizing the desires of the user are displayed.
FIG. 7 is a diagram showing the display on which the devices required for realizing the desires of the user are displayed.

### DESCRIPTION OF EMBODIMENTS

### [Embodiment]

Hereinafter, an embodiment (hereinafter also referred to as "this embodiment") according to one aspect of the present invention will be described based on the drawings.

### 1. Application example

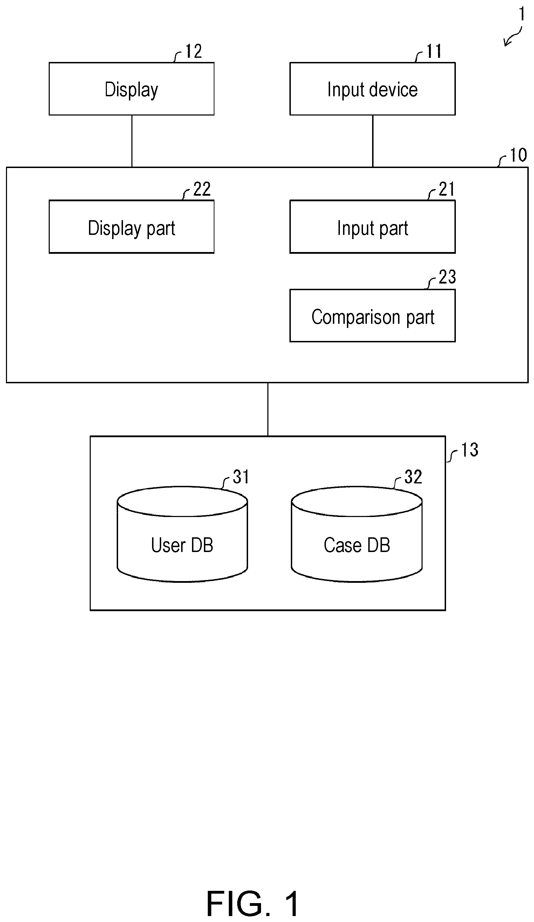

First, an example of a scene to which the present invention is applied will be described. A system configuration proposal device 1 shown in FIG. 1 is used by a user to propose a system configuration including a PLC (Programmable Logic Controller) to the user. The user already has an existing PLC system and desires to do something new with use of some PLC system. The system configuration proposal device 1 presents to the user cases corresponding to such desires of the user.

When accepting selection of the user for a case, the system configuration proposal device 1 compares the existing system configuration of the user with the system configuration corresponding to the accepted case. Then, based on the comparison result, the system configuration proposal device 1 proposes to the user a new system configuration including the devices required for realizing the case. For example, the devices that can obtain a new system configuration which is capable of realizing the case, if added to the existing system configuration of the user, are identified, and addition of such devices to the existing system configuration of the user is proposed to the user. In this way, a new system configuration that takes advantage of the existing system configuration of the user is proposed to the user, so it is possible to reduce the user's time and effort when constructing a new system configuration for realizing the desires of the user.

### 2. Configuration example

The system configuration proposal device 1 according to the embodiment will be described in further detail using FIG. 1. FIG. 1 is a block diagram showing a configuration of the system configuration proposal device 1 according to an embodiment of the present invention. The system configuration proposal device 1 is a device that proposes to the user a PLC system for realizing the desires of the user. As shown in FIG. 1, the system configuration proposal device 1 includes a control part 10, a display 12, an input device 11, and a recording device 13. The control part 10 includes a display part 22 (proposal part), an input part 21, and a comparison part 23.

The control part 10 comprehensively controls various processes in the system configuration proposal device 1. The input device 11 is a device such as a mouse, a keyboard, and a touch panel, through which an operation of the user is input to the system configuration proposal device 1. The display 12 is a device that displays information on a screen, such as a liquid crystal display and an organic EL display. The recording device 13 is a device that stores various types of data (information) required for the system configuration proposal device 1 to execute processes. In this embodiment, a user database (user DB) 31 and a case database (case DB) 32 are formed in the recording device 13.

The input part 21 accepts an operation of the user input to the input device 11. The display part 22 controls display of information on the display 12. Details of the comparison part 23 will be described later.

The user DB 31 stores a project file of the user. The project file is a file that defines the configuration (system configuration) of the PLC system owned by the user. The project file includes information of each device included in the system configuration of the user and a user program for operating each device. The devices include, for example, a master (controller) and slaves of the PLC. The project file includes information of the master and information of at least one slave controlled by the master.

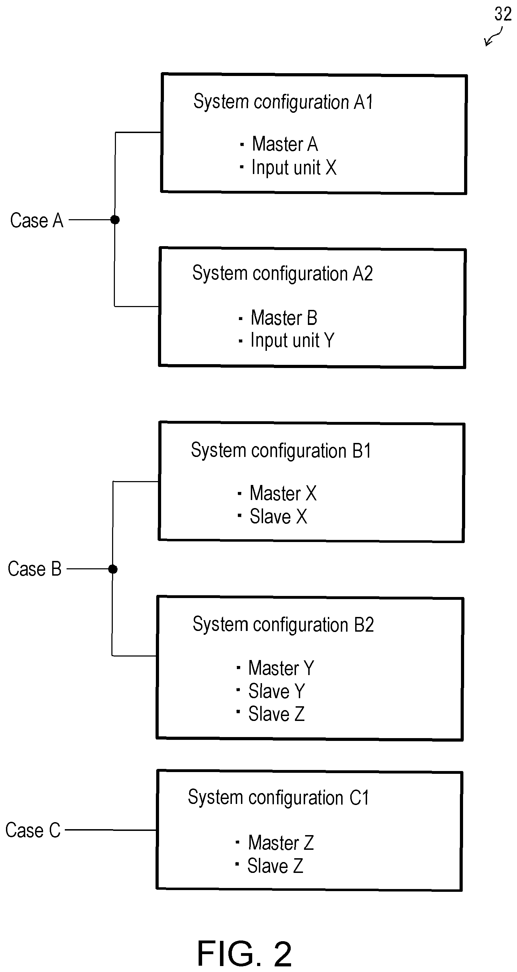

FIG. 2 is a diagram showing an example of the information stored in the case DB 32. The case DB 32 stores information related to various cases in the PLC system. The case refers to an example of the desires of the user with use of some PLC system. The cases include, for example, the following:
- monitoring the power consumption of the devices and equipment,
- reducing the frequency of sudden line stoppages due to dirt adhering to the sensor detection surface and the number of times of cleaning,
- avoiding the screw troubles and space issues in the low-voltage switch of the three-connection induction motor,
- detecting the existence of a workpiece in the index table,
- reducing the man-hours for wiring due to push-in plus terminal block type terminal relay,
- constantly monitoring the deodorizing fan motor of the scrubber (steam gas processing equipment),
- constantly monitoring the bearing of the cooling water circulation pump,
- constantly monitoring packing deterioration of the homogenizer sliding part,
- reducing the man-hours for fiber unit selection,
- reducing false detection of electronic components in a narrow space in the device,
- preventing foreign matter contamination when detecting the passage of coffee stick (food and beverage products), and
- stably detecting background (base) and color marks (registration marks) with subtle color differences.

In the example of FIG. 2, the case DB 32 stores information related to case A, information related to case B, and information related to case C. Case A is actually "reducing the frequency of sudden line stoppages due to dirt adhering to the sensor detection surface and the number of times of cleaning." Case B is another case different from case A. Case C is another case different from cases A and B.

The case DB 32 stores a plurality of case IDs individually representing a plurality of cases. In the example of FIG. 2, three case IDs respectively representing case A, case B, and case C are stored in the case DB 32. Case A, case B, and case C shown in FIG. 2 respectively correspond to the case ID representing case A, the case ID representing case B, and the case ID representing case C.

The case DB 32 further stores, for each case, the system configuration information required for realizing the corresponding case in association with the case ID. In the example of FIG. 2, information of the system configuration A1 and information of the system configuration A2 are stored in the case DB 32 in association with the case ID of case A. Furthermore, information of the system configuration B1 and information of the system configuration B2 are stored in the case DB 32 in association with the case ID of case B. Furthermore, information of the system configuration C1 is stored in the case DB 32 in association with the case ID of case C.

The system configurations A1 and A2 are both system configurations required for realizing case A. The system configuration A1 includes the master A and the input unit X, and the system configuration A2 includes the master B and the input unit X. The masters A and B are both masters required for realizing case A. The masters A and B are masters different from each other in terms of performance, specifications, cost, etc., but there is no difference for use to realize case A. The input unit X is a slave required for realizing case A.

Each system configuration is the minimum configuration required for realizing the corresponding case. For example, the system configuration A1 corresponding to case A includes the minimum master A and input unit X required for realizing case A. This means that case A can be realized with the minimum system configuration A1 including the master A and the input unit X.

Case A, that is, a case of "reducing the frequency of sudden line stoppages due to dirt adhering to the sensor detection surface and the number of times of cleaning," is solved by using a certain photoelectric sensor in the PLC system. This photoelectric sensor is called a photoelectric sensor X hereinafter. The photoelectric sensor X has a connector of a specific shape. Further, since the photoelectric sensor X is a device having a sensing function, the photoelectric sensor X needs to be connected to a slave having an input terminal. Thus, in order to use the photoelectric sensor X in some PLC system, a slave having a connector of a specific shape for inserting the photoelectric sensor X and an input terminal is required. Since the input unit X is a slave that satisfies this condition, the input unit X is a kind of slave required for realizing case A.

The system configurations B1 and B2 are both system configurations required for realizing case B. The system configuration B1 includes the master X and the slave X, and the system configuration B2 includes the master Y, the slave Y, and the slave Z. The masters X and Y are both masters required for realizing case B. The masters X and Y are masters different from each other in terms of performance, specifications, cost, etc., but there is no difference in that the masters X and Y are masters required for realizing case B. The slaves X, Y, and Z are all slaves required for realizing case B. The slaves X, Y, and Z are slaves different from one another in terms of performance, specifications, cost, etc., but there is no difference in that the slaves X, Y, and Z are slaves required for realizing case B. The slaves Y and Z are slaves that are capable of realizing case B only when both are present.

The system configuration C1 is a system configuration required for realizing case C. The system configuration C1 includes the master Z and the slave Z. The master Z is a slave required for realizing case C. The slave Z is a slave required for realizing case C.

### 3. Control example

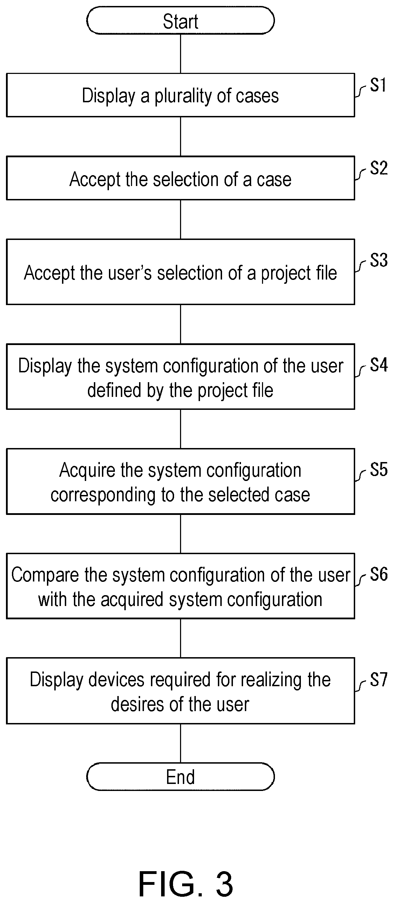

FIG. 3 is a flowchart showing the flow of a series of processes executed by the system configuration proposal device 1. In the system configuration proposal device 1, the display part 22 displays a plurality of cases on the display 12 (step S1). Specifically, the display part 22 reads a plurality of case IDs stored in the case DB 32 and case information associated with these case IDs. Then, each read case information is listed and displayed.

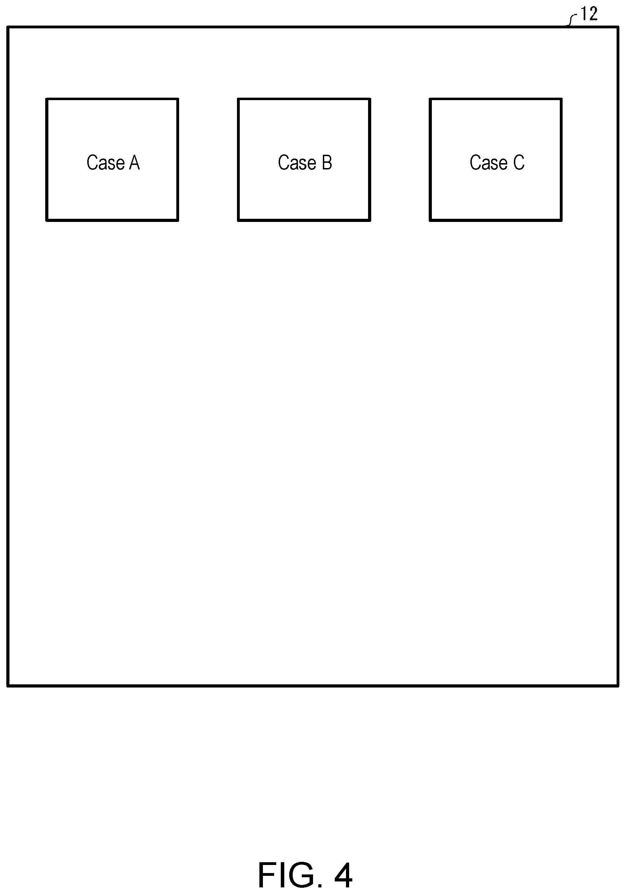

FIG. 4 is a diagram showing the display 12 on which three cases A to C are displayed. The display part 22 displays three cases A to C side by side on the screen of the display 12 as shown in FIG. 4, for example. It is assumed that case A, case B, and case C displayed in FIG. 4 are any of the cases listed above. For example, case A is a case of "reducing the frequency of sudden line stoppages due to dirt adhering to the sensor detection surface and the number of times of cleaning." Cases B and C are other cases. In FIG. 4, case A, case B, and case C are illustrated in a simplified manner for convenience of explanation, but on the actual screen, text explaining the actual case is displayed as case information. For example, at the display position of case A, the text of "reducing the frequency of sudden line stoppages due to dirt adhering to the sensor detection surface and the number of times of cleaning" explaining case A, and an image or icon representing case A are displayed. The user views these text and image and selects any case corresponding to the desires of the user.

Here, it is assumed that what the user desires is case A. The user operates the input device 11 to select case A displayed on the display 12. The input part 21 accepts the selection of case A performed by the user by detecting this operation (step S2). Next, the user operates the input device 11 to select the project file corresponding to the configuration of the PLC system currently owned by the user. The input part 21 accepts the user's selection of the project file by detecting this operation (step S3).

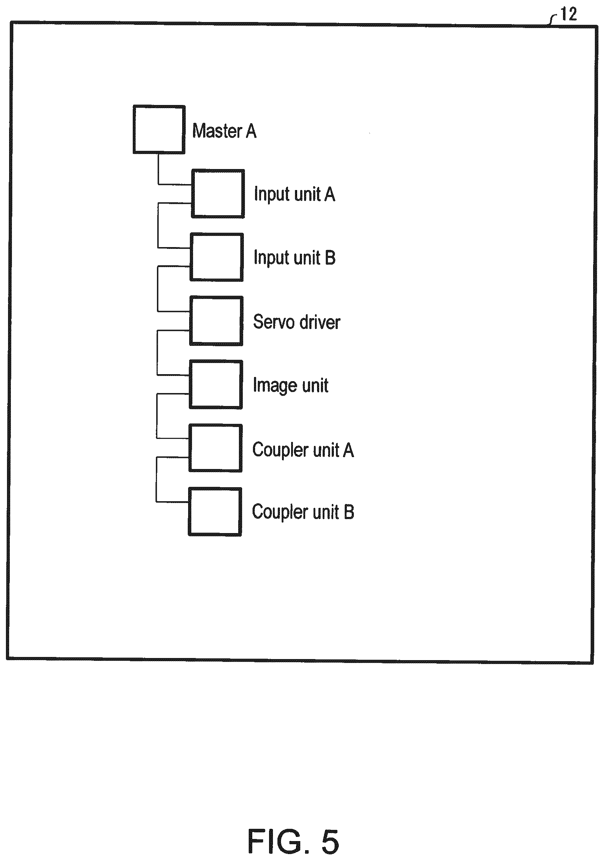

FIG. 5 is a diagram showing the display 12 on which the existing system configuration of the user defined by the project file is displayed. The input part 21 notifies the display part 22 that the project file has been selected. The display part 22 reads the selected project file from the user DB 31. The display part 22 displays the existing system configuration of the user defined by the read project file on the display 12 as shown in FIG. 5 (step S4).

A plurality of devices included in the system configuration of the user are defined in the project file. Here, the master A, the input unit A, the input unit B, the servo driver, the image unit, the coupler unit A, and the coupler unit B are defined in the selected project file. These are all devices included in the system configuration defined by the project file. The master A is a controller (control device) of the PLC. The input unit A, the input unit B, the servo driver, the image unit, the coupler unit A, and the coupler unit B are all slaves of the PLC controlled by the master A. The display part 22 displays the master A and each slave on the display 12 in association with each other as shown in FIG. 5. In FIG. 5, the master A is displayed at the relatively uppermost position, and the input unit A, the input unit B, the servo driver, the image unit, the coupler unit A, and the coupler unit B are respectively displayed below the master A in this order. By viewing the screen shown in FIG. 5, the user grasps the details of the system configuration defined by the selected project file.

Next, the comparison part 23 acquires the system configuration corresponding to the selected case A from the case DB 32 (step S5). The acquisition procedure is as follows. The display part 22 notifies the comparison part 23 of the case ID representing the selected case A. The comparison part 23 acquires an arbitrary system configuration stored in the case DB 32 in association with the notified case ID. Here, among the system configurations Al and A2 corresponding to case A, only the system configuration A1 is acquired.

The comparison part 23 compares the existing system configuration with the acquired system configuration A1 (step S6). Specifically, the comparison part 23 sequentially compares whether the master A and the input unit X included in the system configuration A1 match each device such as the input unit A included in the existing system configuration. The existing system configuration includes the master A as shown in FIG. 5. Thus, the comparison part 23 identifies that the master A required for realizing case A is already included in the existing system configuration of the user. In addition, all the slaves included in the existing system configuration are slaves different from the input unit X. Thus, the comparison part 23 identifies that the input unit X required for realizing case A is not included in the existing system configuration of the user. The comparison part 23 notifies the display part 22 of these identification results.

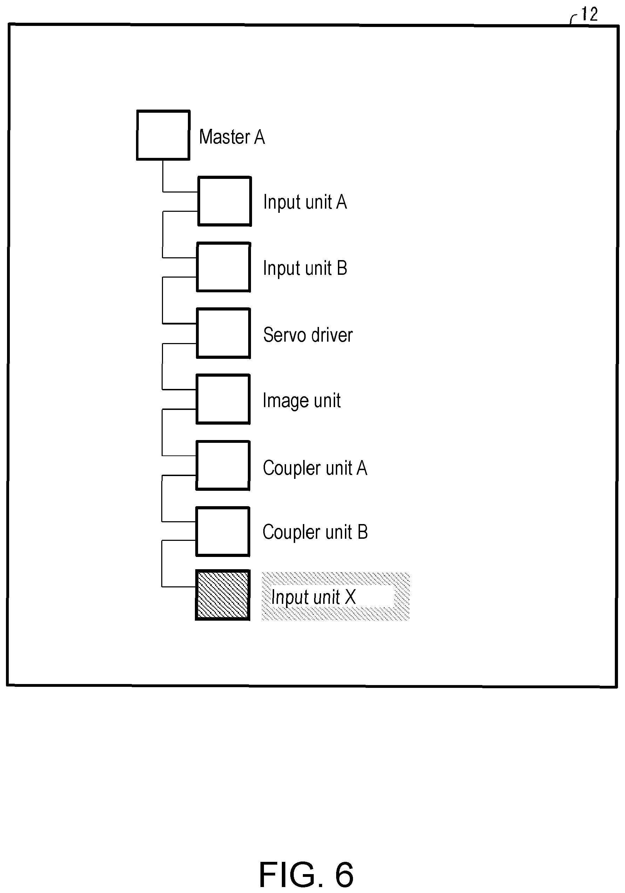

FIG. 6 is a diagram showing the display 12 on which the devices required for realizing the desires of the user are displayed. As shown in FIG. 6, the display part 22 displays on the display 12 the input unit X that is newly required for realizing the desires of the user (case A) (step S7). This proposes a new system configuration including the input unit X to the user. At this time, the display part 22 associates the input unit X with the system configuration of the user and displays these at once. In the example of FIG. 6, the display part 22 displays the input unit X in a state of being connected to the terminal slave in the system configuration of the user. The terminal slave is the coupler unit B as shown in FIG. 5. Therefore, the display part 22 displays the input unit X on the display 12 so as to be connected to the coupler unit B and arranged downstream of the coupler unit B as shown in FIG. 6. Since the master A included in the system configuration A1 is already included in the existing system configuration, the display part 22 directly displays the existing master A without proposing addition of the master A to the user.

By viewing the new system configuration in which the input unit X is additionally displayed as shown in FIG. 6, the user is able to grasp the overall image of the new system configuration capable of realizing case A that the user desires. Furthermore, the user is able to grasp that it is possible to realize case A by adding the input unit X to the existing system configuration of the user.

The display part 22 displays by visually distinguishing the input unit X to be added to the existing system configuration of the user from the devices already included in the system configuration. In FIG. 6, the display part 22 makes the display color of the input unit X different from the display color of the input unit A, etc. By viewing the screen of the display 12 shown in FIG. 6, the user is able to easily grasp that the device to be added for realizing case A is the input unit X.

The user can select the displayed input unit X by operating the input device 11. When detecting this operation, the input part 21 incorporates the selected input unit X into the existing system configuration of the user. Specifically, the input unit X is additionally saved in the project file in the user DB 31.

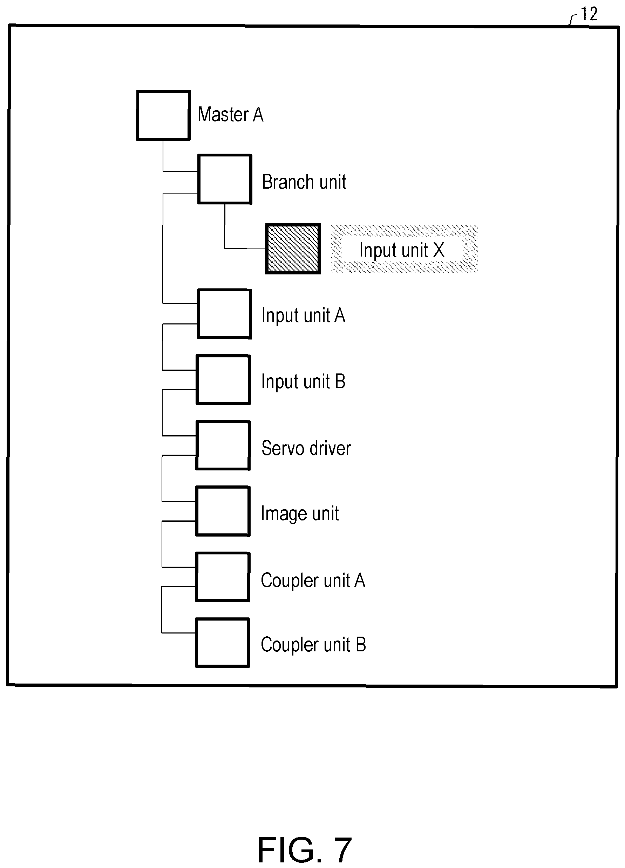

FIG. 7 is a diagram showing the display 12 on which the devices required for realizing the desires of the user are displayed. The display part 22 may display the input unit X required for realizing the desires of the user on the display 12 as shown in FIG. 6. In the example of FIG. 7, the display part 22 displays the input unit X in a state of being added to another system different from the existing slave system in the system configuration of the user. Specifically, the display part 22 displays on the display 12 a branch unit connected directly under the master A and the input unit X connected to the branch unit. Furthermore, the display of the connection destination of the input unit X is changed so that the connection destination of the input unit A is changed from the master A to the branch unit. By viewing the new system configuration in which the input unit X is additionally displayed as shown in FIG. 7, the user is able to grasp that it is possible to realize case A by adding the branch unit and the input unit X to the existing system configuration of the user.

In the example of FIG. 7, the display part 22 displays by visually distinguishing the input unit X to be added to the existing system configuration of the user from each device already included in the system configuration. In FIG. 7, the display part 22 makes the display color of the input unit X different from the display color of the input unit A, etc. The display color of the branch unit is the same as the display color of the input unit A, etc. However, the display part 22 may also make the display color of the branch unit different from the display color of the input unit A, etc., as for the input unit X. By viewing the screen of the display 12 shown in FIG. 7, the user is able to easily grasp that the device to be added for realizing case A is the input unit X.

### (Main effects)

According to this embodiment, the system configuration proposal device 1 proposes to the user a new system configuration for realizing the desires of the user (that is, case A) based on the existing system configuration of the user. Thus, it is possible to make a proposal that takes advantage of the existing system configuration of the user. The user who accepts such a proposal does not need to design a new system configuration for realizing case A by himself/herself. There is no need for the user to consider by himself/herself what devices should be added to the existing system configuration of the user to construct a new system configuration that realizes case A. In this way, the system configuration proposal device 1 is capable of reducing the burden on the user when constructing a new system configuration for realizing the desires of the user.

### (Modified example)

The display part 22 may display the performance and specifications of the input unit X to be added together with the input unit X on the display 12 when proposing a system including the additional input unit X to the user.

The display part 22 may further display on the display 12 the cost of the additional input unit X included in the system proposed to the user together with the input unit X. When proposing a system including a plurality of additional slaves to the user, the display part 22 may display on the display 12 the sum of the costs of the plurality of slaves to be added together with the plurality of slaves to be added.

When case A is selected, the comparison part 23 may acquire the system configuration A2 corresponding to case A from the case DB 32. In this case, the comparison part 23 compares the master A included in the system configuration of the user with the master B included in the system configuration A1 corresponding to case A. At this time, it is assumed that the performance of the master B is higher than the performance of the master A. Thus, the comparison part 23 identifies that the performance of the master B is higher than the performance of the master A. The comparison part 23 further identifies that the input unit Y required for realizing case A is not included in the existing system configuration of the user. The comparison part 23 notifies the display part 22 of these identification results.

The display part 22 receives this notification and displays both the master B and the input unit Y on the display 12, thereby proposing both the master B and the input unit Y to the user. The user receives this proposal and grasps that it is possible to construct a PLC system that realizes case A by replacing the existing master A with the new master B and adding the input unit Y.

When proposing both the master B and the input unit Y to the user, the display part 22 may display on the display 12 the sum of the cost of the master B and the cost of the input unit Y together with the master B and the input unit Y.

When a plurality of different system configurations correspond to the case selected by the user, the display part 22 may display these system configurations at once. For example, in the example of FIG. 3, case A corresponds to both the system configuration A1 and the system configuration A2. That is, case A is realized by both the system configuration A1 and the system configuration A2. Thus, when the user selects case A, the display part 22 may display the input unit X included in the system configuration A1 and the master B and the input unit Y included in the system configuration A2 on the display 12 at once. This can give the user an opportunity to consider whether to select the input unit X or the master B and the unit Y. The user is allowed to consider various conditions such as the cost and performance of each unit or the performance and cost of the master B, and select more preferable devices as appropriate.

If the device required for realizing the selected case is not included in the existing system configuration of the user, the display part 22 may propose a system configuration including minimum devices among a plurality of system configurations corresponding to the selected case. For example, it is assumed that the user selects case B. In this case, the comparison part 23 can acquire the system configuration B1 or B2 corresponding to case B from the case DB 32. The comparison part 23 first acquires the system configuration B1, and compares each device included in the system configuration B1 with each device included in the existing system configuration of the user. Thereby, the comparison part 23 identifies that neither the master X nor the slave X included in the system configuration B1 is included in the existing system configuration.

Thus, the comparison part 23 then acquires the system configuration B2 from the case DB 32 and compares each device included in the system configuration B2 with each device included in the existing system configuration of the user. Thereby, the comparison part 23 identifies that none of the master X, the slave Y, and the slave Z included in the system configuration B2 is included in the existing system configuration.

Based on these identification results, the comparison part 23 identifies that the devices required for realizing the selected case B are not included in the existing system configuration of the user. Thus, the comparison part 23 notifies the display part 22 of the system configuration B1, which has the smallest number of devices included in the system configuration, among the system configurations B1 and B2 corresponding to case B. The display part 22 receives this notification and proposes the master X and the slave X included in the system configuration B1 to the user. Thereby, the user is able to select the minimum devices required for realizing case B, and therefore is able to construct a new system that realizes case B at the minimum cost.

After selecting case A, the user may input a control cycle required for the master included in the new system configuration that realizes case A. For example, 125 µs, 500 µs, or 2 ms is input. The input part 21 accepts this input operation and notifies the comparison part 23 of the same. The comparison part 23 acquires from the case DB 32 a system configuration corresponding to case A and including a master that is operable with a control cycle equal to or less than the selected control cycle. The display part 22 proposes the acquired system configuration to the user. For example, it is assumed that the master B is capable of operating with a control cycle of 200 µs or less. Also, it is assumed that the user has selected case A and input 500 µs. In this case, the comparison part 23 acquires from the case DB 32 the system configuration A2 including the master B that is capable of operating with 500 µs or less and corresponding to case A. The display part 22 displays on the display 12 the master B and the input unit Y included in the system configuration A2. Thereby, the system configuration proposal device 1 is capable of proposing to the user the master B that satisfies the control cycle desired by the user.

When proposing a new system configuration including the additional input unit X to the user, the display part 22 can further propose to the user to add function blocks in the master A included in the system configuration. For example, the candidate function blocks to be added may be displayed together with the input unit X on the display 12.

The user is able to operate the input device 11 to select a device (servo, inverter, robot, etc.) that the user wishes to use in the proposed system configuration. When the input part 21 accepts this operation, the display part 22 appropriately changes the system configuration proposed to the user according to the selection result of the user. For example, when servo is selected, the system configuration corresponding to servo may be displayed on the display 12.

The system configuration proposal device 1 may further include a communication part (not shown) that communicates with an external server. The communication part may acquire a web page including cases A to C from the server. In this case, the display part 22 displays cases A to C on the display 12 by displaying the acquired web page on the display 12. For example, when case A is selected by the user through the displayed web page, the communication part notifies the server that case A has been selected. The server receives this notification and transmits the case ID representing case A to the system configuration proposal device 1. The communication part receives the transmitted case ID and outputs the same to the comparison part 23. The comparison part 23 acquires the system configuration A1 or the system configuration A2 corresponding to the case ID of the input case A from the case DB 32.

### [Implementation example]

Each functional block of the system configuration proposal device 1 (in particular, the input part 21, the display part 22, and the comparison part 23) may be implemented by a logic circuit (hardware) formed in an integrated circuit (IC chip) or the like, or may be implemented by software.

In the latter case, the control device includes a computer that executes instructions of a program, which is software that implements each function. This computer includes, for example, one or more processors, and includes a computer-readable recording medium storing the program. Then, in the computer, the processor reads the program from the recording medium and executes the program, thereby achieving the object of the present invention.

As the processor, for example, a CPU (Central Processing Unit) can be used. As the recording medium, a "non-transitory tangible medium" such as a ROM (Read Only Memory), a tape, a disk, a card, a semiconductor memory, and a programmable logic circuit can be used.

In addition, a RAM (Random Access Memory) for expanding the program may be further provided. Furthermore, the program may be supplied to the computer via any transmission medium (communication network, broadcast wave, etc.) capable of transmitting the program. One aspect of the present invention can also be implemented in the form of a data signal embedded in a carrier wave in which the program is embodied by electronic transmission.

### [Summary]

A system configuration proposal device according to one aspect of the present invention includes: an input part accepting selection of a user for a case; a comparison part comparing an existing system configuration of the user including a PLC (Programmable Logic Controller) with a system configuration corresponding to the case selected; and a proposal part proposing to the user a new system configuration including a device required for realizing the case based on a comparison result.

According to the above configuration, a new system configuration including the device for realizing the case is proposed to the user based on the comparison result between the existing system configuration of the user including the PLC and the system configuration corresponding to the case selected by the user. That is, a new system configuration that takes advantage of the existing system of the user is proposed to the user as a system configuration that is capable of realizing the case. The user who receives such a proposal does not need to design a new system configuration for realizing the case by himself/herself. There is no need for the user to consider by himself/herself what device should be added to the existing system configuration of the user to construct a new system configuration that realizes the case. In this way, the system configuration proposal device is capable of reducing the burden on the user when constructing a new system configuration for realizing the desires of the user.

In an embodiment, the proposal part proposes to the user the device that is included in the system configuration corresponding to the case and not included in the existing system configuration.

According to the above configuration, it is possible to appropriately propose to the user the device required for realizing the case that the user desires.

In an embodiment, the proposal part displays the existing system configuration and the device required for realizing the case in association with each other on a screen.

According to the above configuration, the user is allowed to grasp the overall image of the new system configuration capable of realizing the case that the user desires.

In an embodiment, the proposal part displays by visually distinguishing each device included in the existing system configuration for realizing the case from the device required for realizing the case.

According to the above configuration, the user is able to easily grasp which device should be added to realize the case.

A system configuration proposal method according to one aspect of the present invention includes: an input part configured to receive, from a user, a selection of a case from a predetermined set of application cases of Programmable Logic Controller, PLC,
system; a comparison part configured to compare an existing system configuration including a PLC with a system configuration corresponding to the case selected;
and a proposal part configured to propose to the user a new system configuration including a device required for realizing the case based on a comparison result.

According to the above configuration, it is possible to reduce the burden on the user when constructing a new system configuration for realizing the desires of the user.

Various modifications are possible within the scope defined by the claims. Embodiments obtained by appropriately combining the technical means disclosed in different embodiments are also included in the technical scope of the present invention. New technical features can also be formed by combining the technical means disclosed in the embodiments.

### Reference Signs List

1 system configuration proposal device
10 control part
11 input device
12 display
13 recording device
21 input part
22 display part
23 comparison part
31 user DB
32 case DB

## Claims

1. A system configuration proposal device (1), comprising:
an input part (21) configured to receive, from a user, a selection of a case from a predetermined set of application cases of Programmable Logic Controller, PLC, system;
a comparison part (23) configured to compare an existing system configuration including a PLC with a system configuration corresponding to the case selected; and
a proposal part (22) configured to propose to the user a new system configuration including a device required for realizing the case based on a comparison result.

2. The system configuration proposal device according to claim 1, wherein the proposal part is configured to propose to the user the device that is included in the system configuration corresponding to the case and not included in the existing system configuration.

3. The system configuration proposal device according to claim 1 or 2, wherein the proposal part is configured to display the existing system configuration and the device required for realizing the case in association with each other on a screen (12).

4. The system configuration proposal device according to claim 3, wherein the proposal part is configured to display by visually distinguishing each device included in the existing system configuration from the device required for realizing the case.

5. A system configuration proposal method, comprising:
an inputting step of receiving, from a user, a selection of a case from a predetermined set of application cases of Programmable Logic Controller, PLC, system (S2);
a comparing step of comparing an existing system configuration including a PLC with a system configuration corresponding to the case selected (S6); and
a proposing step of proposing to the user a new system configuration including a device required for realizing the case based on a comparison result (S7).

## Patentansprüche

1. Systemkonfigurationsvorschlagsvorrichtung (1), umfassend:
ein Eingabeteil (21), das so konfiguriert ist, dass es von einem Benutzer eine Auswahl eines Falls aus einem vorgegebenen Satz von Anwendungsfällen eines Programmable Logic Controller, SPS, Systems empfängt;
ein Vergleichsteil (23), das so konfiguriert ist, dass es eine bestehende Systemkonfiguration, die eine SPS umfasst, mit einer dem ausgewählten Fall entsprechenden Systemkonfiguration vergleicht; und
ein Vorschlagsteil (22), das so konfiguriert ist, dass es dem Benutzer auf der Grundlage eines Vergleichsergebnisses eine neue Systemkonfiguration vorschlägt, die eine zur Realisierung des Falls erforderliche Vorrichtung umfasst.

2. Systemkonfigurationsvorschlagsvorrichtung nach Anspruch 1, wobei das Vorschlagsteil so konfiguriert ist, dass es dem Benutzer die Vorrichtung vorschlägt, die in der dem Fall entsprechenden Systemkonfiguration umfasst ist und nicht in der bestehenden Systemkonfiguration umfasst ist.

3. Systemkonfigurationsvorschlagsvorrichtung nach Anspruch 1 oder 2, wobei das Vorschlagsteil so konfiguriert ist, dass es die bestehende Systemkonfiguration und die zu der Realisierung des Falls erforderliche Vorrichtung in Zuordnung zueinander auf einem Bildschirm (12) anzeigt.

4. Systemkonfigurationsvorschlagsvorrichtung nach Anspruch 3, wobei das Vorschlagsteil so konfiguriert ist, dass es durch visuelles Unterscheiden jeder in der bestehenden Systemkonfiguration umfassten Vorrichtung von der zu der Realisierung des Falls erforderlichen Vorrichtung anzeigt.

5. Systemkonfigurationsvorschlagsverfahren, umfassend:
einen Eingabeschritt zum Empfangen einer Auswahl eines Falls aus einem vorgegebenen Satz von Anwendungsfällen eines Programmable Logic Controller, PLC, Systems (S2);
einen Vergleichsschritt zum Vergleichen einer bestehenden Systemkonfiguration, die eine PLC umfasst, mit einer dem ausgewählten Fall entsprechenden Systemkonfiguration (S6); und
einen Vorschlagsschritt zum Vorschlagen einer neuen Systemkonfiguration an den Benutzer, die eine zur Realisierung des Falls erforderliche Vorrichtung umfasst, auf der Grundlage eines Vergleichsergebnisses (S7).

## Revendications

1. Dispositif de proposition de configuration de système (1), comprenant :
une partie d'entrée (21) configurée pour recevoir, de la part d'un utilisateur, une sélection d'un cas parmi un ensemble prédéterminé de cas d'application d'un système à automate programmable industriel, API;
une partie de comparaison (23) configurée pour comparer une configuration de système existante comprenant un API à une configuration de système correspondant au cas sélectionné ; et une partie de proposition (22) configurée pour proposer à l'utilisateur une nouvelle configuration de système comprenant un dispositif nécessaire à la mise en œuvre du cas, sur la base d'un résultat de comparaison.

2. Dispositif de proposition de configuration de système selon la revendication 1, dans lequel la partie de proposition est configurée pour proposer à l'utilisateur le dispositif qui est inclus dans la configuration de système correspondant au cas et qui n'est pas inclus dans la configuration de système existante.

3. Dispositif de proposition de configuration de système selon la revendication 1 ou 2, dans lequel la partie de proposition est configurée pour afficher la configuration de système existante et le dispositif nécessaire à la mise en œuvre du cas en les associant l'un à l'autre sur un écran (12).

4. Dispositif de proposition de configuration de système selon la revendication 3, dans lequel la partie de proposition est configurée pour afficher en distinguant visuellement chaque dispositif inclus dans la configuration de système existante du dispositif nécessaire à la mise en œuvre du cas.

5. Procédé de proposition de configuration de système, comprenant :
une étape d'entrée consistant à recevoir, de la part d'un utilisateur, la sélection d'un cas parmi un ensemble prédéterminé de cas d'application d'un système automate programmable industriel, API, (S2) ;
une étape de comparaison consistant à comparer une configuration de système existante comprenant un API à une configuration de système correspondant au cas sélectionné (S6) ; et une étape de proposition consistant à proposer à l'utilisateur une nouvelle configuration de système comprenant un dispositif nécessaire à la mise en œuvre du cas sur la base d'un résultat de comparaison (S7).
